# FASCICULE DE BREVET EUROPEEN

(11) **EP 0 886 131 B1**
(45) Date de publication et mention de la délivrance du brevet: **07.01.2004**
(21) Numéro de dépôt: 98401457.1
(22) Date de dépôt: 15.06.1998
(51) Int. Cl.: G01H 3/12

(54) **Dispositif de mesure de bruit dans un conduit parcouru par un fluide.**
Vorrichtung zur Messung von Lärm in einer Rohrleitung mit darin fliessendem Fluid
Device for measuring noise in a fluid-carrying pipe

(30) Priorité: 17.06.1997 FR 9707501
(43) Date de publication de la demande: 23.12.1998
(73) Titulaire: AIRBUS France, 31060 Toulouse Cedex 03 (FR)
(72) Inventeur: Bousquet, Philippe, App. n 16, Bât. A, 31700 Blagnac (FR)
(74) Mandataire: Poulin, Gérard

(56) Documents cités:
- DE-A- 2 347 307
- DE-A- 2 902 565
- PATENT ABSTRACTS OF JAPAN vol. 015, no. 246 (E-1081), 24 juin 1991 -& JP 03 076499 A (HITACHI PLANT ENG & CONSTR CO LTD;OTHERS: 01), 2 avril 1991
- PATENT ABSTRACTS OF JAPAN vol. 095, no. 006, 31 juillet 1995 -& JP 07 072873 A (SHARP CORP), 17 mars 1995
- PATENT ABSTRACTS OF JAPAN vol. 014, no. 478 (M-1036), 18 octobre 1990 -& JP 02 192541 A (NIPPON DENSO CO LTD), 30 juillet 1990
- W. NEISE: "Theoretical and experimental investigations of microphone probes for sound measurements in turbulent flow" JOIRNAL OF SOUND AND VIBRATION, vol. 39, no. 3, 8 avril 1975, pages 371-400, XP002058830 UK

## Description

### Domaine technique

L'invention concerne un dispositif conçu pour mesurer le bruit qui se propage dans un conduit en présence de fluide en mouvement.

Un tel dispositif peut être utilisé quelle que soit la nature du fluide en mouvement, que ce fluide soit gazeux ou liquide. A titre d'exemple non limitatif, le fluide peut être de l'air circulant dans un conduit appartenant à un circuit de conditionnement d'air équipant un aéronef.

Le dispositif de mesure de bruit conforme à l'invention peut être utilisé aussi bien sur un conduit existant qu'en laboratoire. Dans le premier cas, il permet de déterminer le bruit véhiculé dans la conduite par le fluide en mouvement. Selon les résultats des mesures, des systèmes de contrôle actifs sont ensuite placés dans la conduite afin de limiter le bruit.

Lorsque le dispositif est utilisé en laboratoire, il permet de déterminer le bruit engendré par un fluide traversant certaines singularités passives (coude, clapet, rétrécissement, etc.) ou actives (ventilateur, etc.). Les résultats obtenus permettent ensuite de simuler le comportement acoustique d'un ensemble de tuyauteries comportant certaines de ces singularités, au moyen de systèmes informatiques adaptés.

### Etat de la technique

Lorsqu'un fluide se déplace dans un circuit comprenant des irrégularités passives et/ou actives celles-ci engendrent des ondes acoustiques qui se propagent dans le circuit. Ces ondes acoustiques sont appelées « bruits » dans l'ensemble du texte.

L'ensemble des ondes acoustiques ainsi engendrées dans un circuit donné forme un champ acoustique. Lorsqu'une onde acoustique réfléchie est superposée à une onde acoustique incidente, le champ acoustique est dit « réactif ».

Les bruits engendrés dans les circuits parcourus par des fluides constituent des phénomènes parasites qu'il convient de mesurer avec précision, afin de pouvoir les limiter.

Toute mesure de bruit s'effectue au moyen d'un ou plusieurs microphones. Un microphone mesure la pression acoustique et la transforme en un signal électrique. L'utilisation de plusieurs microphones, situés en des emplacements différents le long du chemin suivi par l'onde acoustique, permet de mesurer l'intensité acoustique de cette onde acoustique. Si l'on effectue une analogie avec un circuit électrique, la pression acoustique est l'analogue d'une tension électrique et l'intensité acoustique est l'analogue d'un courant électrique. Selon, que l'on désire connaître l'une ou l'autre de ces deux grandeurs, on utilise un ou plusieurs microphones.

Dans la pratique, on connaît deux techniques de mesure du bruit dans un conduit parcouru par un fluide en mouvement.

Une première technique connue consiste à monter un ou plusieurs microphones directement dans une ouverture formée dans le conduit. Plus précisément, chaque microphone est fixé de façon étanche sur la paroi du conduit, à l'extérieur de celui-ci, de façon telle que sa membrane sensible affleure la surface intérieure du conduit.

Cette technique a pour inconvénient notable que la mesure du bruit est effectuée à proximité de la paroi du conduit, c'est-à-dire dans une zone dans laquelle des couches limites turbulentes du fluide en mouvement engendrent des fluctuations de pression. Ces fluctuations de pression constituent des signaux parasites qui s'ajoutent au signal acoustique que l'on désire mesurer et faussent la mesure.

Pour éliminer ces signaux parasites, il est connu d'implanter simultanément sur le conduit trois microphones judicieusement disposés et d'effectuer un traitement informatique des signaux recueillis. Toutefois, l'atténuation des signaux parasites reste partielle et relativement limitée dans la plupart des cas. Ainsi, la contribution des signaux parasites est atténuée au maximum de 10 à 15 dB dans le signal obtenu après traitement.

Une autre technique connue pour mesurer le bruit dans un conduit parcouru par un fluide en mouvement consiste à placer dans ce conduit un dispositif dit "tube de Neise" ou "tube de Friedrich". Le principe de ce dispositif est étudié dans l'article de W. Neise "Theorical and Experimental Investigations of Microphone Probes for Sound measurements in Turbulent Flow", J.S.V, 39, 371-400, 1975. Un tel dispositif est commercialisé par la firme Brüel & Kjaer sous la référence UA 0436.

Selon cette technique, on place dans l'axe du conduit un tube cylindrique présentant une fente longitudinale de grande longueur couverte d'un matériau poreux. L'extrémité amont du tube (dans le sens de l'écoulement du fluide) est prolongée par un embout en forme d'ogive et son extrémité aval sert à loger un microphone ainsi qu'un préamplificateur.

Du fait que le dispositif est placé dans l'axe du conduit et ne communique avec celui-ci que par une fente recouverte d'un matériau poreux, les signaux parasites dus aux turbulences sont fortement diminués. Ce dispositif présente toutefois plusieurs inconvénients.

Ainsi, la courbe de réponse du microphone, en amplitude et en phase, est perturbée par les réflexions de l'onde sonore sur la partie aval du dispositif lui-même. Afin d'atténuer ces réflexions, du matériau absorbant est généralement placé à l'intérieur du dispositif. Toutefois, la présence de ce matériau absorbant modifie les caractéristiques du conduit étudié.

Par ailleurs, le montage du dispositif dans le conduit perturbe le champ acoustique ainsi que l'écoulement du fluide. Un bruit parasite est donc engendré par le dispositif lui-même.

Enfin, ce dispositif présente une directivité importante qui le rend inutilisable pour effectuer des mesures d'intensité dans un champ acoustique réactif.

Il est également connu de combiner les deux techniques précédentes lorsqu'on désire effectuer une mesure d'intensité acoustique dans un conduit. On monte alors deux microphones directement sur la paroi du conduit, conformément à la première technique. Un traitement des signaux obtenus permet d'atténuer les signaux parasites. Par ailleurs, un dispositif du type "tube de Neise" est placé dans l'écoulement conformément à la deuxième technique. Ce dispositif permet d'extraire la partie cohérente du signal obtenu après traitement.

La combinaison des deux techniques précédentes autorise une diminution maximale des bruits parasites qui reste limitée à environ 25 dB. Par ailleurs, l'utilisation de la deuxième technique ne permet pas d'effectuer des mesures d'intensité dans un champ réactif.

DE-A-29 02 565 décrit un dispositif pour mesurer le bruit dans un conduit parcouru par un fluide. Ce dispositif comprend une fente allongée traversant une paroi du conduit. Un matériau résistif obture cette fente. Un tube avec une autre fente couvre la fente du conduit de façon que les deux fentes soient allongées l'une face à l'autre. Ce tube forme une cavité coiffant hermétiquement la fente du conduit. Un microphone se trouve à un bout du tube, angulairement déplacé par rapport à l'axe du tube.

### Exposé de l'invention

L'invention a précisément pour objet un dispositif permettant de mesurer le bruit dans un conduit parcouru par un fluide en combinant les avantages des deux techniques connues sans en présenter les inconvénients, et notamment en permettant de diminuer les bruits parasites d'environ 35 dB, que le champ acoustique soit réactif ou pas, sans perturber l'écoulement ni les caractéristiques du conduit étudié et en ne modifiant que très peu le champ acoustique.

Conformément à l'invention, ce résultat est obtenu au moyen d'un dispositif de mesure de bruit dans un conduit parcouru par un fluide, comprenant :
- au moins une fente allongée traversant une paroi du conduit, parallèlement à un axe de ce dernier ;
- un matériau résistif obturant la fente ;
- une cavité coiffant hermétiquement la fente, à l'extérieur du conduit, caractérisé en ce que ladite cavité présente des parties d'extrémité formant un angle aigu avec l'axe du conduit, et comporte au moins un trou distant de ces extrémités ; et
- en ce qu'au moins un microphone est fixé sur le trou en face de la fente.

La fente est avantageusement formée dans un tronçon de conduite qui fait partie du dispositif. Du fait que ce tronçon présente le même diamètre que le reste du conduit et du fait qu'aucun élément n'est placé à l'intérieur de celui-ci, l'écoulement n'est pas perturbé. La cavité apporte un très léger amortissement qui ne modifie que très peu les caractéristiques acoustiques du conduit. La présence de la fente, du matériau résistif et de la cavité entre le fluide en mouvement et le microphone, permet d'éliminer les signaux parasites.

Il est à noter qu'il est possible de monter simultanément plusieurs microphones sur la cavité, afin d'effectuer une mesure d'intensité acoustique et/ou un traitement de signal ultérieur.

Le matériau résistif est un matériau transparent au bruit, mais empêchant la transmission dans la cavité des mouvements du fluide circulant dans le conduit. A cet effet, le rapport des impédances du matériau résistif et du fluide est de préférence inférieur à 2.

Le matériau résistif est par exemple un matériau en feuille, tel qu'un film plastique polyuréthane perforé plaqué contre une face extérieure de la paroi.

Dans une forme de réalisation préférentielle de l'invention, la fente est formée au milieu d'une partie plane arasée ménagée sur une face extérieure de la paroi, la cavité étant placée sur cette partie plane arasée.

Lorsque le fluide circulant dans le conduit est de l'air, la fente présente une largeur comprise entre environ 1 mm et environ 3 mm et une longueur d'au moins environ 500 mm.

Dans cette même application, l'angle aigu formé entre les parties d'extrémité de la cavité et l'axe du conduit est au plus d'environ 7°.

En outre, la cavité présente une hauteur d'au moins environ 5 mm dans- la partie principale située entre ses parties d'extrémité.

Le montage du microphone est réalisé de telle sorte que sa membrane affleure la face intérieure de la cavité.

Dans la forme de réalisation préférentielle de l'invention, la cavité a la forme d'un parallélépipède à coins coupés pour former les parties d'extrémité.

Les coins coupés peuvent notamment être obtenu en plaçant deux cales en forme de coins dans un boîtier de forme parallélépipédique.

Afin de préserver la tenue mécanique du tronçon de conduit portant le dispositif, la fente allongée est de préférence formée de fentes élémentaires séparées par des ponts.

### Brève description des dessins

On décrira à présent, à titre d'exemple non limitatif, une forme de réalisation préférée d'un dispositif conforme à l'invention, en se référant aux dessins annexés, dans lesquels :

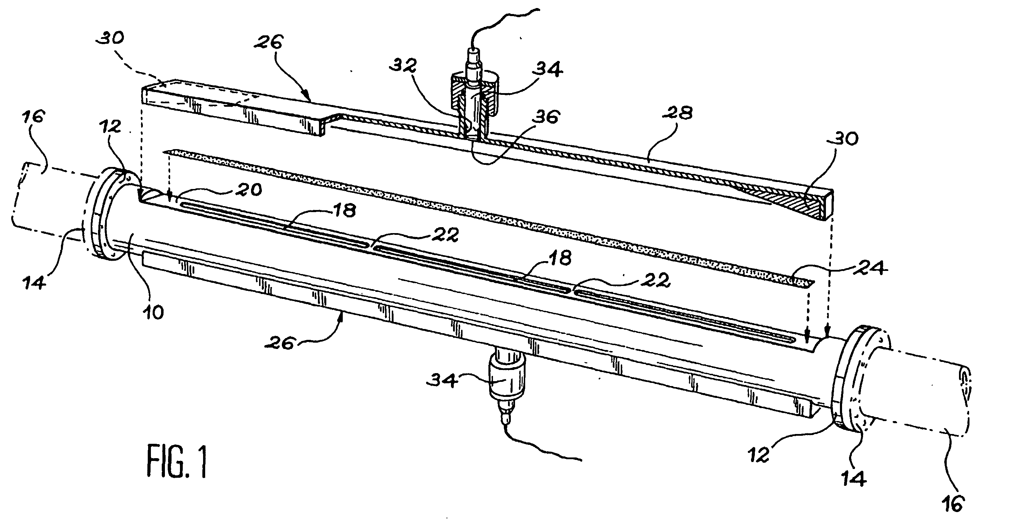

- la figure 1 est une vue en perspective éclatée, partiellement en coupe, qui représente un dispositif de mesure de bruit dans un conduit, réalisé conformément à l'invention ; et

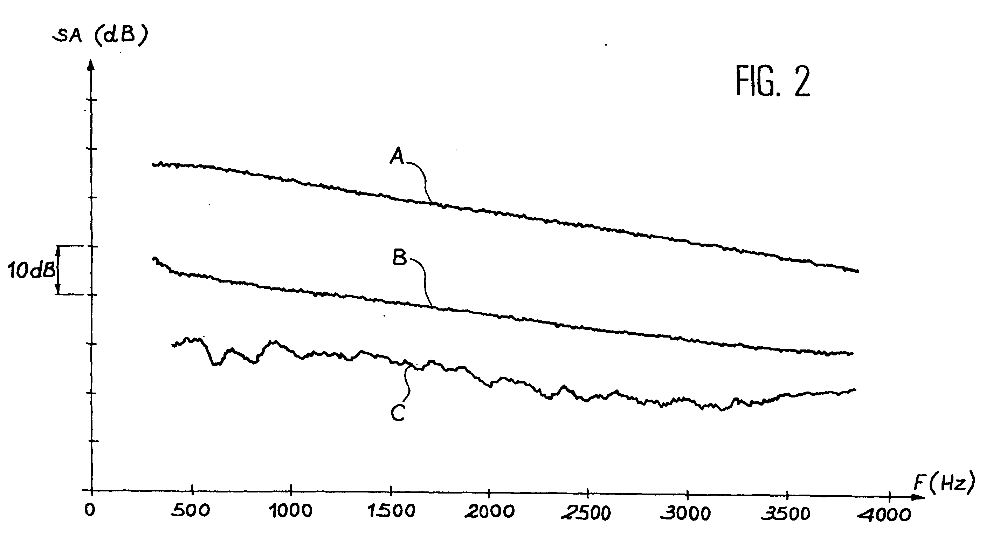

- la figure 2 représente l'évolution, en fonction de la fréquence (en Hertz), du signal acoustique (en dB) délivré par un microphone placé sur un conduit dans lequel de l'air se déplace à 20 m/s, la courbe A illustrant une mesure effectuée par un microphone monté rasant directement sur le conduit, conformément à l'art antérieur, la courbe B illustrant une mesure effectuée par un microphone associé à une cavité, conformément à l'invention, et la courbe C illustrant une mesure analogue à celle de la courbe B, suivie d'un traitement connu du signal.

### Exposé détaillé d'une forme de réalisation préférée

Dans la forme de réalisation représentée sur la figure 1, le dispositif de mesure conforme à l'invention comprend un tronçon de conduit 10, conçu pour être inséré dans le conduit 16 dans lequel on désire effectuer les mesures, sans perturber l'écoulement du fluide.

Ce tronçon de conduit 10 se présente sous la forme d'un tube droit dont la section intérieure est identique à celle du conduit 16 dans lequel il doit être placé. Le tronçon de conduit 10 est avantageusement réalisé dans le même matériau que le conduit 16.

Pour permettre son montage dans le conduit 16, le tronçon de conduit 10 est terminé par une bride 12 à chacune de ses extrémités. Les brides 12 sont prévues pour être fixées de façon étanche sur des brides 14 formées aux extrémités attenantes du conduit 16. Le raccordement étanche des brides 12 et 14 peut être assuré par tous moyens de fixation appropriés tels que des boulons (non représentés) associés à des joints d'étanchéité.

En variante, le dispositif de mesure de bruit conforme à l'invention peut être implanté directement sur le conduit 16 dans lequel circule le fluide, sans qu'il soit nécessaire d'insérer un tronçon de conduit distinct dans le circuit.

Dans la forme de réalisation représentée sur la figure 1, une fente allongée 18 traverse la paroi du tronçon de conduit 10, parallèlement à l'axe longitudinal de ce dernier. Plus précisément, la fente 18 est formée au milieu d'une partie plane arasée 20 usinée sur la surface extérieure de la paroi du tronçon de conduit 10; La fente 18 présente une largeur réduite et s'étend sur la majeure partie de la longueur de la partie plane arasée 20, qui est elle-même proche de la longueur totale du tronçon de conduit 10.

La profondeur de la fente 18, qui dépend de l'épaisseur de paroi restante après l'usinage de la partie plane arasée 20, est aussi petite que possible, sans pénaliser les qualités de résistance mécanique du tronçon de conduit 10. Afin d'améliorer la rigidité de ce dernier, la fente 18 est formée -de préférence de plusieurs fentes élémentaires alignées, séparées par des ponts 22. Dans la forme de réalisation représentée sur la figure 1, la fente 18 est formée de trois fentes élémentaires séparées par deux ponts 22 de largeur réduite (par exemple, environ 1 mm).

Dans l'application de l'invention à des mesures de bruit dans un conduit parcouru par de l'air, la longueur minimale de la fente 18 est d'environ 500 mm. Dans la forme de réalisation illustrée sur la figure 1, la fente 18 présente une longueur de 1000 mm.

Par ailleurs, la largeur de la fente 18 est théoriquement aussi faible que possible. Toutefois, les essais réalisés par le demandeur n'ont pas montré de différence notable lorsqu'on fait varier cette largeur entre environ 1 mm et environ 2 mm. Dans la pratique, la largeur de la fente 18 est de préférence comprise entre environ 1 mm et environ 3 mm.

Comme l'illustre la figure 1, le dispositif de mesure de bruit selon l'invention comprend de plus un matériau résistif 24 en feuille, qui est plaqué contre la partie plane arasée 20, formée sur la face extérieure du tronçon de conduit 10, de façon à obturer la fente 18. Ce matériau résistif 24 se présente de préférence sous la forme d'un film plastique polyuréthane perforé, présentant une impédance acoustique de 15 à 24 Rayls cgs.

Le matériau résistif 24 est choisi afin d'être transparent au bruit, tout en empêchant la transmission des mouvements du fluide circulant dans le conduit. Il s'agit d'un matériau présentant une faible résistance acoustique et dont l'impédance est proche de celle du fluide circulant dans le conduit. Plus précisément, le rapport des impédances du matériau résistif 24 et du fluide est inférieur à 2.

La feuille de matériau résistif 24 est maintenue plaquée contre la partie plane arasée 20 par un moyen quelconque (collage, tissu autocollant, coincement, etc.), de façon à recouvrir et obturer en totalité la fente 18.

Comme l'illustre la figure 1, le dispositif de mesure de bruit selon l'invention comprend également une cavité 26 qui est placée à l'extérieur du tronçon de conduit 10, sur la partie plane arasée 20, de façon à coiffer hermétiquement la fente 18 et le matériau résistif 24. La cavité 26 constitue un volume clos qui communique avec l'intérieur du tronçon de conduit 10 par la fente 18, au travers du matériau résistif 24.

Dans la forme de réalisation illustrée sur la figure 1, la cavité 26 présente la forme d'un parallélépipède rectangle allongé, à coins coupés. Elle présente une face ouverte, par laquelle elle est fixée sur la partie plane arasée 20 par tout moyen approprié (soudure, collage, bridage, vis, etc.).

Plus précisément, la face ouverte de la cavité, raccordée de façon étanche sur la partie plane arasée 20, est un rectangle dont la longueur est légèrement supérieure à celle de la fente 18 et dont la largeur est comprise entre la largeur de la fente 18 et celle de la partie plane arasée 20. Dans la forme de réalisation représentée à titre d'exemple sur la figure 1, la longueur de ce rectangle est de 1000 mm et sa largeur est d'environ 13,5 mm. La face de la cavité 26 opposée à la fente 18 est un rectangle de même largeur mais de longueur réduite. Les faces latérales de la cavité 26, parallèles à l'axe du tronçon de conduit 10, sont des trapèzes isocèles.

En dehors de sa face ouverte fixée sur la partie plane arasée 20 du tronçon de tube 10, la cavité 26 est délimitée par une paroi. Cette paroi est formée principalement par un boîtier parallélépipédique 28 et par deux cales 30 en forme de coin, fixées dans le boîtier 28 par tout moyen approprié (vissage, collage, etc.). Le boîtier 28 est lui-même fixé sur la partie plane arasée par tout moyen approprié (soudure, collage, bride, vis, etc.). Les matériaux constitutifs du boîtier 28 et des cales 30 sont des matériaux rigides quelconques tels que des métaux.

Les cales 30 constituent un moyen simple, et non limitatif, pour former un angle aigu entre les parties d'extrémité de la cavité 26 (selon l'axe longitudinal du tronçon de conduit 10) et cet axe longitudinal. Plus précisément, on donne de préférence à cet angle une valeur au plus égale à environ 7° (par exemple, 5,7°). Cette caractéristique permet une bonne adaptation d'impédance du dispositif avec le conduit et limite l'influence des modes évanescents.

Dans sa partie principale située entre les parties d'extrémité formées par les cales 30, la cavité présente une hauteur au moins égale à environ 5 mm, pour éviter la création de phénomènes perturbateurs complexes, difficilement modélisables. Dans la forme de réalisation décrite, une hauteur de 10 mm a été retenue.

En un emplacement distant de ses parties d'extrémité formées par les cales 30, la cavité 26 comporte au moins un trou circulaire 32 sur sa face opposée à la fente 18. Dans le cas où un seul trou 32 est prévu, comme l'illustre la figure 1, ce trou est placé sensiblement à égale distance des extrémités de la cavité. Par ailleurs, chacun des trous 32 est disposé à égale distance des faces latérales trapézoïdales de la cavité 26.

Comme l'illustre la figure 1, un microphone 34 est fixé de façon étanche sur chacun des trous 32 de la cavité 26, à l'extérieur de celle-ci, de façon à faire face à la fente 18. Plus précisément, cette fixation est réalisée de telle sorte que la membrane 36 du microphone 34 affleure la face intérieure de la cavité 26. La fixation du microphone 34 sur la cavité 26 peut être réalisée par tout moyen (ressort de compression, vissage, etc.).

Il est à noter que plusieurs trous 32 sont de préférence prévus sur une même cavité 26, pour permettre le montage simultané de plusieurs microphones 34. Dans le cas où un seul microphone 34 est utilisé, les autres trous 32 sont obturés par des bouchons étanches (non représentés) tels que des bouchons vissés.

Lorsque plusieurs microphones sont implantés sur une même cavité 26, le montage est réalisé afin que chacun des microphones soit distant d'au moins environ 250 mm de l'extrémité la plus proche de la cavité. En effet, les extrémités du dispositif créent des ondes évanescentes qui ne se propagent pas et dont l'amplitude décroît exponentiellement avec la distance. Comme on l'a déjà noté, l'angle aigu, d'au plus environ 7° formé entre les parties d'extrémité de la cavité 26 et l'axe du tronçon de conduit 10 limite l'influence des modes évanescents.

La forme de réalisation particulière de la cavité 26 décrite précédemment en se référant à la figure 1 peut être remplacée par toute autre forme de réalisation équivalente préservant notamment l'inclinaison des parties d'extrémité de la cavité. En variante, une forme en demi-cylindre peut aussi être retenue.

Il est à noter par ailleurs que deux dispositifs analogues au dispositif décrit peuvent être prévus de part et d'autre du tronçon de conduit 10. Ces dispositifs peuvent alors être placés parfaitement en vis-à-vis l'un de l'autre ou légèrement décalés selon l'axe du tronçon de conduit, comme on l'a illustré sur la figure 1. Cet agencement permet de pouvoir utiliser plusieurs microphones 34 judicieusement répartis, pour effectuer ensuite un traitement des signaux délivrés par chacun de ces microphones.

Afin d'évaluer les performances du dispositif de mesure de bruit conforme à l'invention, on a mesuré, à l'aide d'un même microphone, un signal acoustique nul sur un conduit parcouru par de l'air à une vitesse de 20 m/s.

Plus précisément et comme l'illustre la courbe A sur la figure 2, on a effectué une première mesure en plaçant directement le microphone affleurant à la paroi du conduit, selon la technique classique. Comme l'illustre la courbe B, on a ensuite effectué une mesure similaire en plaçant le même microphone dans le dispositif illustré sur la figure 1. Sur chacune des deux courbes, on a porté en abscisse la fréquence F (en Hertz) et en ordonnée le signal acoustique mesuré SA (en dB). La comparaison des courbes A et B sur la figure 2 montre que l'invention permet une réduction supérieure à 25 dB des signaux parasites dus aux turbulences qui se produisent près des parois du conduit, quelle que soit la fréquence. En y ajoutant un dispositif connu de traitement du signal, la réduction est alors supérieure à 30 DB (courbe C).

Etant donné que le dispositif selon l'invention n'est pas directif lorsqu'il est placé dans l'axe du conduit, cette réduction des effets parasites est observée aussi bien lorsque le champ acoustique n'est pas réactif qu'en présence d'un champ acoustique réactif.

De plus, par suite de l'implantation du dispositif en totalité à l'extérieur du conduit, l'écoulement du fluide à l'intérieur de celui-ci n'est pas perturbé. En outre, même si la cavité apporte un très léger amortissement, le champ acoustique n'est que très peu perturbé.

Par ailleurs, il est à noter qu'aucun matériau absorbant ne vient modifier les caractéristiques du milieu.

Enfin, comme on l'a déjà observé, l'utilisation de plusieurs microphones associés à une ou plusieurs cavités extérieures au conduit permet de cumuler les avantages du dispositif selon l'invention avec ceux procurés par un traitement des signaux délivrés par les microphones.

## Revendications

1. Dispositif de mesure de bruit dans un conduit (10) parcouru par un fluide, comprenant :
- au moins une fente allongée (18) traversant une paroi du conduit (10), parallèlement à un axe de ce dernier ;
- un matériau résistif (24) obturant la fente (18) ;
- une cavité (26) coiffant hermétiquement la fente (18), à l'extérieur du conduit (10), **caractérisé en ce que** ladite cavité présente des parties d'extrémité (30) formant un angle aigu avec l'axe du conduit, et comporte au moins un trou (32) distant de ces extrémités ; et
- **en ce qu'**au moins un microphone (34) est fixé sur le trou (32) en face de la fente (18).

2. Dispositif selon la revendication 1, dans lequel la fente (18) est formée dans un tronçon de conduit (10) de même section que le conduit (10).

3. Dispositif selon l'une quelconque des revendications précédentes, dans lequel le rapport des impédances du matériau résistif (24) et du fluide est inférieur à 2.

4. Dispositif selon l'une quelconque des revendications précédentes, dans lequel le matériau résistif (24) est un matériau en. feuille, plaqué contre une face extérieure de la paroi.

5. Dispositif selon l'une quelconque des revendications précédentes, dans lequel la fente (18) est formée au milieu d'une partie plane arasée (20) ménagée sur une face extérieure de la paroi, la cavité (26) étant placée sur cette partie plane arasée.

6. Dispositif selon l'une quelconque des revendications précédentes, dans lequel la fente (18) présente une largeur comprise entre environ 1 mm et environ 3 mm.

7. Dispositif selon l'une quelconque des revendications précédentes, dans lequel la fente (18) présente une longueur d'au moins environ 500 mm.

8. Dispositif selon l'une quelconque des revendications précédentes, dans lequel l'angle aigu formé entre les parties d'extrémité (30) de la cavité (26) et l'axe du conduit (10) est au plus d'environ 7°.

9. Dispositif selon l'une quelconque des revendications précédentes, dans lequel, entre ses parties d'extrémité (30), la cavité (26) présente une hauteur d'au moins environ 5 mm.

10. Dispositif selon l'une quelconque des revendications précédentes, dans lequel le microphone (34) comporte une membrane (36) qui affleure une face intérieure de la cavité (26).

11. Dispositif selon l'une quelconque des revendications précédentes, dans lequel la cavité (26) a la forme d'un parallélépipède à coins coupés pour former les parties d'extrémité (30).

12. Dispositif selon la revendication 11, dans lequel la cavité (26) comprend un boîtier parallélépipédique, dans lequel sont placées deux cales (30) en forme de coins formant les parties d'extrémité.

13. Dispositif selon l'une quelconque des revendications précédentes, dans lequel la fente allongée (18) est formée de fentes élémentaires séparées par des ponts (22).

## Patentansprüche

1. Vorrichtung zum Messen von Lärm in einer von einem Fluid durchströmten Leitung (10), umfassend:
- wenigstens einen länglichen Schlitz (18), der eine Wand der Leitung (10) parallel zu einer Achse derselben durchsetzt;
- ein den Schlitz (18) verschließendes resistives Material (24);
- einen den Schlitz (18) hermetisch überdeckenden Hohlraum (26) außerhalb der Leitung (10), **dadurch gekennzeichnet, daß** der Hohlraum Endbereiche (30) aufweist, die einen spitzen Winkel mit der Leitungsachse bilden, und wenigstens ein von diesen Enden beabstandetes Loch (32) umfaßt; und
- daß wenigstens ein Mikrophon (34) an dem Loch (32) gegenüber dem Schlitz (18) befestigt ist.

2. Vorrichtung nach Anspruch 1, bei der der Schlitz (18) in einem Abschnitt der Leitung (10) mit gleichem Querschnitt wie die Leitung (10) gebildet ist.

3. Vorrichtung nach einem der vorhergehenden Ansprüche, bei der das Verhältnis der Impedanzen des resistiven Materials (24) und des Fluids kleiner als 2 ist.

4. Vorrichtung nach einem der vorhergehenden Ansprüche, bei der das resistive Material (24) ein folienartiges Material ist, das an einer Außenfläche der Wand aufgebracht ist.

5. Vorrichtung nach einem der vorhergehenden Ansprüche, bei der der Schlitz (18) in der Mitte eines abgeflachten Bereichs (20) gebildet ist, der an einer Außenfläche der Wand vorgesehen ist, wobei der Hohlraum (26) auf diesem abgeflachten Bereich angeordnet ist.

6. Vorrichtung nach einem der vorhergehenden Ansprüche, bei der der Schlitz (18) eine Breite zwischen ungefähr 1 mm und ungefähr 3 mm aufweist.

7. Vorrichtung nach einem der vorhergehenden Ansprüche, bei der der Schlitz (18) eine Länge von wenigstens ungefähr 500 mm aufweist.

8. Vorrichtung nach einem der vorhergehenden Ansprüche, bei der der zwischen den Endbereichen (30) des Hohlraums (26) und der Achse der Leitung (10) gebildete spitze Winkel höchstens ungefähr 7° beträgt.

9. Vorrichtung nach einem der vorhergehenden Ansprüche, bei der der Hohlraum (26) zwischen seinen Endbereichen (30) eine Höhe von wenigstens ungefähr 5 mm aufweist.

10. Vorrichtung nach einem der vorhergehenden Ansprüche, bei der das Mikrophon (34) eine Membran (36) umfaßt, die mit einer Innenfläche des Hohlraums (26) fluchtet.

11. Vorrichtung nach einem der vorhergehenden Ansprüche, bei der der Hohlraum (26) die Form eines Parallelepipeds mit abgeschnittenen Ecken zur Bildung der Endbereiche (30) aufweist.

12. Vorrichtung nach Anspruch 11, bei der der Hohlraum (26) ein Parallelepipedgehäuse umfaßt, in dem zwei Leisten (30) in Form von Keilen angeordnet sind, die die Endbereiche bilden.

13. Vorrichtung nach einem der vorhergehenden Ansprüche, bei der der längliche Schlitz (18) durch Elementarschlitze gebildet ist, die durch Stege (22) voneinander getrennt sind.

## Claims

1. Device for measuring noise in a pipe (10) traversed by a fluid, comprising:
- at least one elongated slot (18) traversing a wall of the pipe (10), parallel to an axis of the latter,
- a resistive material (24) sealing the slot (10),
- a cavity (26) hermetically capping the slot (18), outside the pipe, **characterized in that** said cavity has end portions (30) forming an acute angle with the axis of the pipe, and has at least one hole (32) remote from said ends and **in that**
- at least one microphone (34) is fixed to the hole (32) facing the slot (18).

2. Device according to claim 1, wherein the slot (18) is formed in a pipe section (10) having the same cross-section as the pipe (10).

3. Device according to either of the preceding claims, wherein the ratio of the impedances of the resistive material (24) and the fluid is below 2.

4. Device according to any one of the preceding claims, wherein the resistive material (24) is a sheet material engaged against an outer face of the wall.

5. Device according to any one of the preceding claims, wherein the slot (18) is formed in the centre of a level, planar portion (20) formed on an outer face of the wall, the cavity (26) being placed on said level, planar portion.

6. Device according to any one of the preceding claims, wherein the slot (18) has a width between approximately 1 mm and approximately 3 mm.

7. Device according to any one of the preceding claims, wherein the slot (18) has a length of at least approximately 500 mm.

8. Device according to any one of the preceding claims, wherein the acute angle formed between the end portions (30) of the cavity (26) and the axis of the pipe (30) is at the most approximately 7°.

9. Device according to any one of the preceding claims, wherein the cavity (26) has a height of at least approximately 5 mm between its end portions (30).

10. Device according to any one of the preceding claims, wherein the microphone (34) has a diaphragm (36) flush with the inner face of the cavity (26).

11. Device according to any one of the preceding claims, wherein the cavity (26) is in the form of a parallelepiped with cut corners for forming the end portions (30).

12. Device according to claim 11, wherein the cavity (26) comprises a parallelepipedic box, in which are placed two wedge-shaped shims (30) forming the end portions.

13. Device according to any one of the preceding claims, wherein the elongated slot (18) is formed by elementary slots separated by bridges (22).
